# EUROPÄISCHE PATENTANMELDUNG

(11) **EP 2 006 021 A1**
(43) Veröffentlichungstag der Anmeldung: **24.12.2008**
(21) Anmeldenummer: 07012186.8
(22) Anmeldetag: 21.06.2007
(51) Int. Cl.: B01L 3/02

(54) **Pipettieraufsatz**

(71) Anmelder: Hamilton Bonaduz AG, CH-7402 Bonaduz (CH)
(72) Erfinder: Panzer, Armin, 7014 Trin-Dorf (CH); Kübler, Walter, 9434 Au (CH)
(74) Vertreter: Trossin, Hans-Jürgen

(57) **Zusammenfassung**

Die Erfindung betrifft einen Pipettieraufsatz (10), umfassend einen sich entlang eines Durchgangs, der an gegenüberliegenden Stirnseiten in jeweilige Stirnöffnungen (36a- 36d) mündet, erstreckenden Mantel (34a - 34d, 40, 22), wobei der Mantel (34a - 34d, 40, 22) an der einen Stirnseite mit einer ersten Koppelanordnung (30) versehen ist, welche mit einer ersten Gegen-Koppelanordnung einer Pipettiereinheit koppelbar ist, und wobei der Mantel (34a - 34d, 40, 22) an der anderen Stirnseite eine Öffnung (20) zum Durchtritt eines zu pipettierenden Mediums aufweist. Die erste Koppelanordnung (30) weist eine Mehrzahl von jeweils eine Stirnöffnung (36a - 36d) umgebenden Koppelelementen (32a - 32d) auf, wobei ein jedes der Koppelelemente (32a - 32d) mit einem jeweils zugeordneten aus einer Gruppe von mehreren an der Pipettiereinheit ausgebildeten Gegen-Koppelelementen, von denen ein jedes einem Pipettierkanal der Pipettiereinheit zugeordnet ist, koppelbar ist, oder/und der Mantel (22, 40 34a - 34d) weist an der anderen Stirnseite eine Mehrzahl von Öffnungen (22) zum Durchtritt des zu pipettierenden Mediums auf.

## Beschreibung

Die vorliegende Erfindung betrifft einen Pipettieraufsatz, umfassend einen sich entlang eines Durchgangs, der an gegenüberliegenden Stirnseiten in jeweilige Stirnöffnungen mündet, erstreckenden Mantel, wobei der Mantel an der einen Stirnseite mit einer ersten Koppelanordnung versehen ist, welche mit einer ersten Gegen-Koppelanordnung einer Pipettiereinheit koppelbar ist, und wobei der Mantel an der anderen Stirnseite eine Öffnung zum Durchtritt eines zu pipettierenden Mediums aufweist.

Der Pipettieraufsatz ist zum Aufsetzen auf eine Pipette und insbesondere zum Einsatz mit einer Mehrfach-Pipettiervorrichtung ausgebildet. Bei Mehrfach-Pipettiervorrichtungen sind an einer Pipettiereinheit eine Mehrzahl von Pipettieranordnungen mit zugehörigen Antriebs- und Steuereinrichtungen vorgesehen, die jeweils einen sogenannten Pipettierkanal bilden. Insbesondere soll der Aufsatz bei solchen Pipettiervorrichtungen zur Anwendung kommen, bei denen der Pipettiervorgang weitgehend automatisiert, d.h. ohne manuelle Eingriffe durch eine Bedienungsperson abläuft.

Beim Pipettieren von Medien, in der Regel mehr oder weniger viskose Flüssigkeiten, mittels einer Pipette bzw. Pipettiereinheit der genannten Art wird durch Eintauchen einer Pipettenspitze, die einen von einem Mantel der Pipettenspitze umschlossenen Durchgang und eine in der Stirnseite des Mantels ausgebildete Öffnung aufweist, und Erzeugen eines Unterdrucks in einem mit der Öffnung in Verbindung stehenden Hohlraum, der zumindest teilweise in der Pipettenspitze ausgebildet ist, zunächst eine bestimmte Menge einer Flüssigkeit in den Hohlraum eingebracht (Aspiration) und dann nach Bewegen der Pipette zu in einem vorbestimmten Zielort ein Überdruck in dem Hohlraum erzeugt, der dafür sorgt, dass eine bestimmte Menge des zu pipettierenden Mediums wieder durch die Öffnung abgegeben wird (Dispensation). Die Pipettenspitze ist häufig ein von dem eigentlichen Pipettenkörper mit Einrichtungen zur Erzeugung von Unterdruck/Überdruck separates Teil und wird zum Gebrauch auf den Pipettenkörper aufgesetzt. Dies ermöglicht es, die mit dem zu pipettierenden Medium in Kontakt gelangenden Bereiche in die Pipettenspitze zu verlagern, welche nur einmal gebraucht und anschließend entsorgt wird, während der Pipettenkörper samt zugehöriger Einrichtungen zur Unterdruck/Überdruckerzeugung mehrfach mit immer neuen Pipettenspitzen verwendet werden kann. Zur Kopplung von Pipettenspitze und Pipettenkörper kann beispielsweise eine Koppelanordnung vorgesehen sein, wie sie in der DE 199 17 375 A1 offenbart ist. Diese Koppelanordnung, auf die hier ausdrücklich Bezug genommen wird und die als zur Offenbarung der vorliegenden Anmeldung gehörend anzusehen ist, gestattet ein äußerst zuverlässiges automatisiertes Aufnehmen und Abwerfen der Pipettenspitze.

Mehrfach-Pipettiereinheiten weisen eine-Mehrzahl von an einem gemeinsamen Träger nebeneinander angeordneten Pipettieranordnungen auf, die jeweils zur unabhängigen und separaten Dosierung eines jeweiligen zu pipettierenden Mediums dienen. Jede dieser Pipettieranordnungen ist damit einem "Pipettierkanal" zugeordnet. Der Träger ist in der Regel plattenförmig mit in der Art einer Matrix in Zeilen und Spalten angeordneten einzelnen Pipettierkanälen. Jeder Pipettierkanal kann dabei unabhängig von den anderen arbeiten, insbesondere kann in jedem der Pipettierkanäle ein von den anderen verschiedenes Medium pipettiert werden. In der Regel verfügt jeder Pipettierkanal über eine eigene Koppelananordnung, mit der eine jeweilige Pipettenspitze vor Beginn eines Pipettiervorgangs gekoppelt werden kann und nach Beendigung entkoppelt und abgeworfen werden kann. Dies ermöglicht Reihenuntersuchungen einer Vielzahl von Proben parallel zueinander, wie es z.B im biochemischen Bereich häufig gewünscht wird.

Die Anzahl der gleichzeitig einsetzbaren Pipettierkanäle hängt von der Pipettiereinheit ab. Es hat sich beispielsweise eingebürgert, Pipettiereinheiten einzusetzen, die über 96 (8 x 12), 384 (32 x 12) oder 1536 (48 x 32) Pipettierkanäle verfügen und dementsprechend ausgebildete Träger mit Pipettieranordnungen aufweisen. Will man mehr oder weniger Pipettierkanäle einsetzen, so muss eine dieser Pipettiereineheiten gegen die entsprechend größere oder kleinere ausgetauscht werden.

Bei der Wahl der richtigen Pipettiereinheit ist insbesondere zu beachten, dass mit größerer Anzahl von Pipettenkanälen wegen immer kleiner werdender Querschnitte der jeweils anzusetzenden Pipettenspitze zwangsläufig das pro Pipettiervorgang maximal pipettierbare Volumen kleiner wird. Die für Mehrfach-Pipettiereinheiten wie oben beschrieben bestimmten Pipettenspitzen sind daher immer auf das jeweils maximal pipettierbare Volumen abgestimmt. Will man größere oder kleinere Volumina pipettieren, ist es notwendig, die jeweils richtige Mehrfach-Pipettiereinheit zu verwenden. Wegen der festen Zuordnung von Träger und Anzahl von Pipettierkanälen bedeutet dies in der Regel den kompletten Austausch der Pipettiereinheit oder des Trägers, was verhältnismäßig unflexibel ist.

Teilweise sind auch Adapterplatten für die Träger von Mehrfach-Pipettiereinheiten erhältlich, welche z. B. bei den Mehrfach-Pipettiereinheiten mit 384 Pipettierkanälen jeweils vier Kanäle zu einem Kanal vereinigen. Damit stehen nach Einbau der Adapterplatte zwar weniger Kanäle zur Verfügung, dafür ist es jedoch möglich, größere Volumina zu dosieren, ohne die Pipettiereinheit bzw. den Träger ganz auswechseln zu müssen. Die Anbringung einer solchen Adapterplatte erfolgt manuell oder kann ggf. unter vergleichsweise grossem technischem Aufwand automatisch erfolgen. Sie hat jedoch zur Folge, dass nach Anbringung der Adapterplatte alle Pipettierkanäle auf die neue Größe umgestellt sind und dementsprechend deutlich weniger Pipettierkanäle zur Verfügung stehen.

Die Erfindung stellt sich die Aufgabe, für eine Pipettiereinheit der genannten Art einen Pipettieraufsatz bereitzustellen, mittels dem in einfacherer und flexiblerer Weise ein gewünschtes zu pipettierendes Volumen für einen Pipettierkanal gewählt werden kann.

Diese Aufgabe wird erfindungsgemäß dadurch gelöst, dass bei einem Pipettieraufsatz der eingangs genannten Art die erste Koppelanordnung eine Mehrzahl von jeweils eine Stirnöffnung umgebenden Koppelelementen aufweist, wobei ein jedes der Koppelelemente mit einem jeweils zugeordneten aus einer Gruppe von mehreren an der Pipettiereinheit ausgebildeten Gegen-Koppelelementen, von denen ein jedes einem Pipettierkanal der Pipettiereinheit zugeordnet ist, koppelbar ist, oder/und der Mantel an der anderen Stirnseite eine Mehrzahl von Öffnungen zum Durchtritt des zu pipettierenden Mediums aufweist.

Bei dem erfindungsgemäßen Pipettieraufsatz können eine Mehrzahl von Pipettierkanälen zu einem einzelnen Kanal zusammengefasst werden, der entweder selbst eine Pipettenspitze bildet oder auf den eine herkömmliche einzelne Pipettenspitze aufgesetzt werden kann. Damit ist es zur Vergrößerung des pro Pipettiervorgang maximal pipettierbaren Volumens möglich, einzelne vorbestimmte der an einer Pipettereinheit bereits vorhandenen Pipettierkanäle zusammenzufassen und mit einer eigenen Pipettenspitze zu versehen. Dies kann für die einzelnen Pipettierkanäle einer Pipettiereinheitgetrennt und unabhängig von den anderen geschehen, so dass nicht alle Kanäle gleichzeitig umgerüstet werden müssen. Da weder ein Austausch der Pipettiereinheit insgesamt noch irgendwelcher Teile davon (insbesondere eines Trägers für die Pipettierkanäle) erforderlich ist, können in flexibler Weise je nach gewünschter Konfiguration Pipettiereinheiten zusammengestellt werden, bei denen jeder Pipettierkanal - je nachdem, wieviele der an der Pipettiereinheit ursprünglich vorgesehenen Pipettierkanale einer gemeinsamen Pipettenspitze zugeordnet werden - ein verschieden großes maximal pipettierbares Volumen an zu pipettierendem Medium aufweist. Eine einmal gewählte Konfiguration lässt sich in einfacher Weise wieder ändern, da mit Ausnahme des Pipettieraufsatzes, der ohnehin ein Verschleißteil oder sogar nur zum Einmalgebrauch bestimmt ist, keine Teile ausgetauscht werden müssen oder aufwändige Umbaumaßnahmen durchgeführt werden müssen.

Es ist gemäß der Erfindung insbesondere möglich, sich eine Pipettiereinheit anzuschaffen, die über möglichst viele einzelne Pipettierkanäle (mit jeweils entsprechend geringem pro Pipettiervorgang maximal pipettierbarem Volumen pro Kanal) verfügt. Will man in einzelnen Anwendungsfällen pro Pipettiervorgang größere Volumina pipettieren, so können in einfacher Weise durch Aufsetzen entsprechender der erfindungsgemäßen Pipettieraufsätze eine entsprechende Anzahl der ursprünglichen Pipettierkanäle zu einem neuen Pipettierkanal zusammengefasst werden. Hierzu weist bei den erfindungsgemäßen Pipettieraufsätzen die erste Koppelanordnung eine Mehrzahl von jeweils eine Stirnöffnung umgebenden Koppelelementen auf, wobei ein jedes der Koppelelemente mit einem jeweils zugeordneten aus einer Gruppe von mehreren an der Pipettiereinheit ausgebildeten Gegen-Koppelelementen, von denen ein jedes einem Pipettierkanal der Pipettiereinheit zugeordnet ist, koppelbar ist, und der Mantel weist an der anderen Stirnseite genau eine Öffnung zum Durchtritt eines zu pipettierenden Mediums auf. Diese Öffnung bildet entweder die Pipettenspitze, oder aber eine herkömmliche, ausreichend große Pipettenspitze ist mit der anderen Stirnseite derartkoppelbar, dass eine Fluidverbindung durch die Stirnöffnung hindurch entsteht.

Alternativ kann auch eine Konfiguration vorgesehen sein, bei der der Mantel an der einen Stirnseite mit einer ersten Koppelanordnung versehen ist, welche mit einer ersten Gegen-Koppelanordnung einer Pipettiereinheit koppelbar ist, wobei die erste Koppelanordnung wenigstens ein eine Stirnöffnung umgebendes Koppelelement aufweist, welches mit einem zugeordneten aus einer Gruppe von mehreren an der Pipettiereinheit ausgebildeten Gegen-Koppelelementen, von denen ein jedes einem Pipettierkanal der Pipettiereinheit zugeordnet ist, koppelbar ist, und bei der der Mantel an der anderen Stirnseite eine Mehrzahl von Öffnungen zum Durchtritt eines zu pipettierenden Mediums aufweist. Bei einer besonders bevorzugten Ausgestaltung dieser Art weist die erste Koppelanordnung genau eine Stirnöffnung und genau ein diese umgebendes Koppelelement auf, welches mit einem zugeordneten aus einer Gruppe von mehreren an der Pipettiereinheit ausgebildeten Gegen-Koppelelementen koppelbar ist. Dann wird ein Pipettierkanal der Pipettiereinheit auf mehrere zugeordnete Pipettenspitzen verteilt, sodass aus einem Pipettierkanal ein zu pipettierendes Medium aus einem gemeinsamen Behälter in eine Mehrzahl von Behältern pipettiert werden kann.

Es sei darauf hingewiesen, dass die erste Koppelanordnung beispielsweise gemäß der in der DE 199 17 375 A1 offenbarten Art ausgestaltet sein-kann.

Der Mantel kann einen die erste Koppelanordnung aufweisenden oberen Mantelabschnitt aufweisen und einen an den oberen Abschnitt anschließenden unteren Mantelabschnitt aufweisen. Der obere und der untere Mantelabschnitt können im einfachsten Fall integral ausgebildet sein, beispielsweise dadurch, dass der eine Mantelabschnitt in einem Zweikomponenten-Spritzgussprozess stirnseitig an den anderen Mantelabschnitt angespritzt wird. Alternativ ist auch vorstellbar, die beiden Mantelabschnitte miteinander zu verschweißen.

Der obere und der untere Mantelabschnitt können auch vollständig separat voneinander hergestellt sein und dann beim Zusammenbau der eine Mantelabschnitt mit seiner Stirnseite an einer zugeordneten Stirnseite des anderen Mantelabschnitts befestigt sein. Vor allem kommen bei dieser Ausführungsform mechanische Befestigungsformen der beiden Abschnitte in Betracht, bei denen beide Abschnitte formschlüssig aneinander gehalten sind, wobei der Formschluss noch durch Spannkräfte kraftschlüssig unterstützt sein kann. Es ist etwa denkbar, die beiden Mantelabschnitte an ihren aneinander anliegenden bzw. einander überlappenden Stirnseiten mit zueinander komplementäre Clip- oder Rastanordnungen zu versehen, so dass sich beim Ineinanderschieben unlösbare und bevorzugt auch fluiddichte Clip- bzw. Rastvorbindungen ergeben.

Die Clip- oder Rastverbindung kann primär der Befestigung der Teile aneinder dienen. Die einander zugeordneten Stirnabschnitte des oberen und des unteren Mantelabschnitts weisen dann je eine zueinander komplementäre Befestigungs-Rastanordnung, beispielsweise eine um den jeweiligen Umfang umlaufende Schnappwulst bzw. Schnappnut auf. In vielen Fällen kann hierdurch bereits eine ausreichende Dichtigkeit erzielt werden, insbesondere dann, wenn das Material der beiden Mantelabschnitte geeignet gewählt ist. So hat es sich beispielsweise gezeigt, dass eine ausreichende Dichtigkeit gegenüber den meisten zum Pipettieren in Frage kommenden Flüssigkeiten erzielt werden kann, wenn die beiden Mantelabschnitte aus demselben Kunststoffmaterial hergestellt werden, insbesondere gespritzt werden.

Sofern eine besonders gute Dichtigkeit gegenüber dem zu pipettierenden Medium gewünscht ist, können zusätzlich noch die einander zugeordneten Stirnabschnitte je eine zueinander komplementäre Dichtungsanordnung aufweisen. Hierzu kann beispielsweise eine neben der Befestigungs-Schnappwulst/Schnappnut-Anordnung vorgesehene Dichtungswulst/Dichtungsumfangsnut-Anordnung dienen. Diese sorgt dann in der Art einer Labyrinthdichtung für eine zusätzliche Abdichtung. Sollte auch die hierdurch erzielbare Dichtigkeit nicht als ausreichend angesehen werden, so können die beiden Mantelabschnitte selbstverständlich zusätzlich aneinander verschweißt werden.

Wie bereits erwähnt, kann der Pipettieraufsatz an seiner anderen Stirnseite als Pipettenspitze ausgebildet sein. Er ist dann mit einer Öffnung versehen, die zum Aufnehmen eines zu pipettierenden Mediums in ein dieses Medium enthaltendes Volumen eintauchbar ist, und durch die das zu pipettierende Medium wieder abgeben werden kann.

In einer bevorzugten Ausgestaltung der Erfindung kann der Pipettieraufsatz auch als Adapter eingesetzt werden, wenn der Mantel an seiner anderen Stirnseite ein weiteres Gegen-Koppelelement aufweist, das mit einem entsprechenden zweiten Koppelelement an einer Stirnseite eines weiteren Mantels koppelbar ist. An der anderen Stirnseite des weiteren Mantels ist dann eine Pipettenspitze ausgebildet. Der andere Mantel kann beispielsweise eine Norm-Pipettenspitze sein, die ein pro Pipettiervorgang maximal pipettierbares Volumen aufweist, das größer als das gewünschte Volumen ist. Die zweite Koppelanordnung kann entsprechend der in der DE 199 17 375 A1 dargestellten Art ausgebildet sein.

Beispielsweise kann die Koppelanordnung an der einen Stirnseite des Mantels vier Koppelelemente aufweisen. Diese können vorzugsweise in einer quadratischen oder rechteckigen Anordnung angeordnet sein. Sie sind dann mit vier einander benachbarten der Pipettierkanäle der Pipettiereinheit koppelbar. Um ein Beispiel zu nennen, kann eine Pipettiereinheit mit 396 Pipettierkanälen bei vollständiger Belegung aller Pipettierkanäle mit solchen Pipettieraufsätzen zu einer Pipettiereinheit mit 96 Pipettierkanälen umgebaut werden.

Die Koppelelemente werden in der Regel in einer nicht drehsymmetrischen Anordnung oder in einer Anordnung mit in vorbestimmten Winkeln zueinander liegenden Drehsymmetrieachsen angeordnet sein. Da in der Regel das Aufnehmen der Pipettieraufsätze aus einem Sammelbehälter dadurch geschieht, dass die Pipettiereinheit zu dem Sammelbehälter verfahren wird und ein im Sammelbehälter befindlicher Pipettieraufsatz an den Gegen-Koppeleinheiten von entsprechend vorgesehenen Pipettierkanälen der Pipettiereinheit angekoppelt wird, muss dann die Pipettiereinheit relativ zu dem Pipettieraufsatz in einer Ebene orthogonal zur Längsachse des Pipettieraufsatzes eine vorbestimmte Stellung einnehmen. Dies kann ohne Zuhilfenahme von zusätzlichen Sensoren dadurch erreicht werden, dass der Pipettieraufsatz einen nicht drehsymmetrischen Anlagebereich zur Anlage an einer Aufnahmeöffnung des Sammelbehälters aufweist. Als nicht drehsymmetrisch beziehen oder aber nur einzelne, in vorbestimmten Drehsymmetrieachse beziehen oder aber nur einzelne, in vorbestimmten Winkeln ineinander stehende Drehsymmetrieachsen besitzen (z.B. ein Quadrat mit zwei im rechten Winkel zueinander stehenden Drehsymmetrieachsen). Die Lage der Pipettiereinheit relativ zum Sammelbehälter kann relativ leicht festgestellt werden, so dass die Pipettiereineheit die zum Aufnehmen des Pipettiereinsatzes erforderliche Lage einnehmen kann. Wenn die Koppelelemente in der Form eines Quadrates angeordnet sind, bietet sich beispielsweise an, dass der Anlagebereich einer um die vier Koppelelemente umlaufenden Außenkontur entspricht und damit eine vierzählige Drehsymmetrie mit im rechten Winkel zueinander stehenden Symmetrieachsen aufweist.

Der Pipettieraufsatz ist in herstellungstechnisch günstiger Weise im Spritzgussverfahren herstellbar, wobei ggf. ein Mehrkomponenten-Spritzgussverfahren zum Einsatz kommt, um die einzelnen Mantelabschnitte aneinander anzuspritzen.

Die Erfindung wird im Folgenden anhand einer bevorzugten Ausführungsform unter Bezugnahme auf die begleitenden Zeichnungen näher erläutert. Es zeigt:
- Figur 1: eine perspektivische Ansicht einer Ausführungsform eines zweiteilig ausgebildeten erfindungsgemäßen Pipettieraufsatzes, und
- Figur 2: eine perspektive Ansicht einer Mehrzahl von Pipettieraufsätzen gemäß Figur 1, die zur Aufnahme durch eine Pipettiereinheit in einem Sammelbehälter gehalten sind.

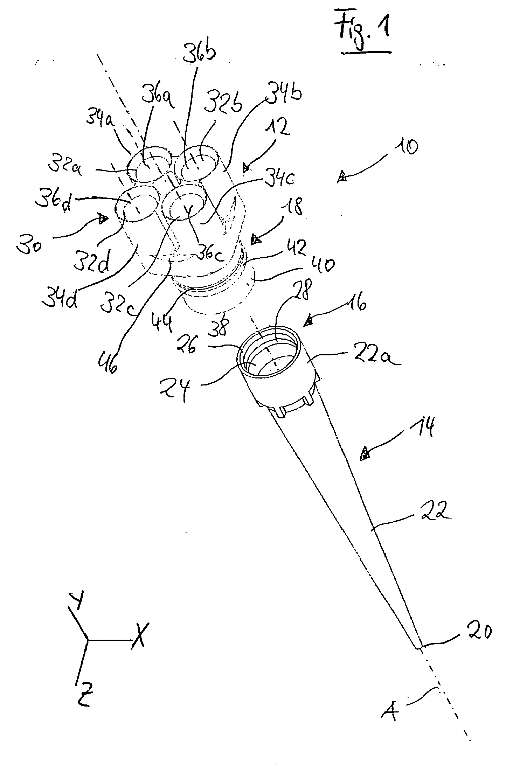

In Figur 1 ist ein Pipettieraufsatz gemäß einer Ausführungsform der vorliegenden Erfindung allgemein mit 10 bezeichnet. Der Pipettieraufsatz ist zweiteilig ausgebildet mit einem Adapterstück 12 und einer Pipettenspitze 14. Die Pipettenspitze 14 entspricht dabei weitgehend einer herkömmlich bekannten Pipettenspitze, wie sie bei automatischen Pipettiervorrichtungen, insbesondere Mehrfach-Pipettiervorrichtungen Verwendung findet. Die Pipettenspitze 14 weist an ihrem einen Ende eine Koppelanordnung 16 zum Eingriff mit einer entsprechenden Gegen-Koppelanordnung 18 an dem in Figur 1 unteren Ende des Adapterstücks 12 auf. Das andere, in Figur 1 untere Ende der Pipettenspitze 14 ist mit einer Entritts-/Austrittsöffnung 20 versehen, durch die im Betrieb ein zu pipetterendes Medium, insbesondere eine Flüssigkeit, aufgenommen und wieder abgegeben wird. Die Pipettenspitze 12 besitzt einen sich längs einer Achse A im Wesentlichen kegelförmig erstreckenden Mantel 22, der an seiner in Figur 1 unteren Stirnseite mit der Eintritts-/Austrittsöffnung 20 ausgebildet ist. An seiner in Figur 1 oberen Stirnseite ist der Mantel 22 mit einem zylindrischen Abschnitt 22a ausgebildet. Im Bereich des zylindrischen Abschnitts 22a weist der Mantel 22 die Koppelanordnung 16 auf, welche eine an der Stirnfläche liegende Durchtrittsöffnung 24 umgibt. Die Durchtrittsöffnung 24 liegt im Wesentlichen in einer orthogonal zur Längsachse A verlaufenden Ebene (XZ-Ebene in Figur 1).

Die Koppelanordnung 16 umfasst eine in der Nähe der Stirnfläche angeordnete Dichtnut 26 sowie eine zweite, weiter axial nach innen verlagerte und tiefer ausgebildete Befestigungsnut 28. Beide Nuten 26 und 28 sind in der Innenfläche des zylindrischen Mantelabschnitts 22a ausgebildet und laufen vollständig um den Umfang des Mantelabschnitts 22a um.

Der Koppelanaordnung 16 der Pipettenspitze 14 entspricht eine Gegen-Koppelanorndung 18, die an der in Figur 1 unteren Stirnseite des Adapterstücks 12, welche der Pipettenspitze 12 zugewandt ist, ausgebildet ist. An dieser Stirnseite läuft das Adapterstück 12 in einem zylinderstutzenförmigen Abschnitt 40 aus und endet schließlich an einer Stirnfläche, die eine Durchtrittsöffnung 38 umgibt. Die Gegen-Koppelanordnung 18 umfasst zwei in der Außenfläche des zylinderstutzenförmigen Abschnitts 40 ausgebildete Umfangswülste 42 und 44, die sich von dem Rand der Öffnung 38 aus mit etwas Abstand axial nach innen befinden. Die beiden Umfangswülste 42 und 44 erstrecken sich um den gesamten Umfang des zylinderförmigen Stutzens 40 herum und stehen von dessen Außenfläche nach außen hin vor. Wie in Figur 1 gut erkennbar ist, schiebt sich beim Zusammenbau der zylindrische Abschnitt 22a der Pipettenspitze 22 außen über den Stutzen 40, so dass die Innenfläche des zylindrischen Abschnitts 22a mit der Außenfläche des Stutzens 40 in Anlage gelangt. Dabei stehen der Stutzen 40 und der zylindrische Abschnitt 22a etwas unter Spannung, so dass schließlich in der Einbaulage die Schnappwülste 42, 44 in die entsprechenden Ringnuten 26, 28 einschnappen. Dabei sorgt der Eingriff der etwas größeren Schnappwulst 42 mit der Ringnut 28 im Wesentlichen für eine formschlüssige Befestigung von Pipettenspitze 14 und Adapterstück 12 aneinander. Der zusätzliche Eingriff der weiteren Schnappwulst 44 in der Ringnut 26 sorgt für eine zusätzliche Abdichtung.

Das Adapterstück 12 ist an seinem in Figur 1 oberen Ende mit einer Koppelanordnung 30 ausgebildet, die bei dem im Figur 1 gezeigten Beispiel vier Koppelelemente 32a - 32d umfasst. Jedes dieser Koppelelemente 32a - 32d ist im Wesentlichen in der Form eines Zylinderstutzens ausgebildet mit einem jeweiligen zylindrischen Mantel 34a - 34d, der eine jeweilige Koppelöffnung 36a - 36d umschließt. Die Achsen der Zylinderstutzen verlaufen im zusammengebauten Zustand parallel zur Achse der Pipettenspitze 14. Die Koppelöffnungen 36a - 36d liegen in einer orthogonal zur Längsrichtung der Zylinderstutzen 32a - 32d verlaufenden Ebene und sind damit im zusammengebauten Zustand parallel zu der Durchtrittsöffnung 24 (XZ-Ebene in Figur 1).

Die Koppelelemente 32a - 32d sind je für sich mit einer Koppelanordnung der in der DE 199 17 345 A1 beschriebenen Art versehen, die aus Gründen der Übersichtlichkeit nicht im Detail dargestellt ist. Mittels dieser Koppelanordnung ist jedes der Koppelelemente 32a - 32d an einer jeweiligen Gegen-Koppeleinheit einer Pipettiereinheit einer Mehrfach-Pipettiervorrichtung anbringbar.

Die Mantelflächen 34a - 34d der Koppelemente 32a -32d bilden gemeinsam eine Außenwand des Adapterstücks 12 in dessen der einen Stirnseite zugewandtem Abschnitt. Diese Außenwand hat einen im Wesentlichen geschwungenen quadratischen Verlauf, mit geringfügigen Einbuchtungen zwischen den Ecken des Quadrats, die jedoch die insgesamt vierzählige Symmetrie nicht beeinflussen. Zusammen mit dem zylinderstutzenförmigen Abschnitt 40 und dem Mantel 22 der Pipettenspitze 14 bilden die Koppelelemente 32a - 32d damit im zusammengebauten Zustand einen Mantel des Pipettieraufsatzes 10, welcher einen zwischen den vier Öffnungen 36a - 36d an der einen Stirnseite und der Eintritts-/Austrittsöffung 20 an der anderen Stirnseite verlaufenden Durchgang umschließt.

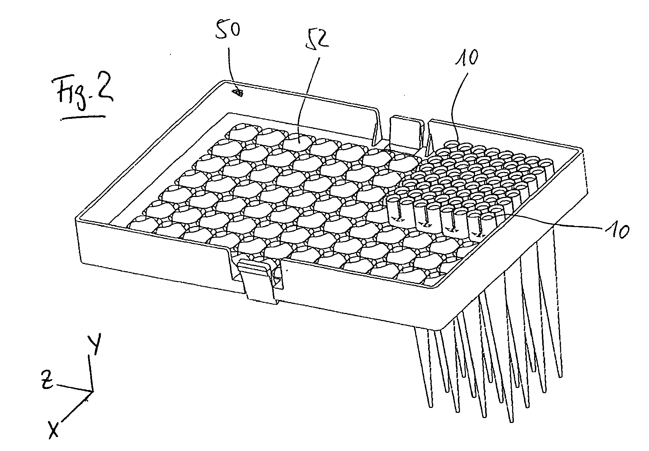

In Figur 1 ist noch ein um den Außenumfang des Adapterstücks 12 umlaufender Anlagebereich 46 zu erkennen, entlang dem das Adapterstück 12 an einer Aufnahmeöffnung 52 eines Sammelbehälters 50 (siehe Figur 2) anliegt. Dieser Anlagebereich folgt dem durch die Mantelflächen 34a - 34d der vier zylindrischen Koppelelemente 32a - 32d gebildeten Außenumfang und ist daher im Wesentlichen ebenfalls quadratisch mit vierzähliger Drehsymmetrie.

Figur 2 zeigt eine Mehrzahl von Pipettieraufsätzen 10 der in Figur 1 gezeigten Ausführungsform, die in einem Sammelbehälter 50 aufgenommen sind. Der Sammelbehälter 50 besitzt eine rechteckige Form mit einer Anordnung einer Mehrzahl von Aufnahmeöffnungen 52 für Pipettieraufsätze 10, die in rechtwinklig zueinander stehenden Zeilen und Spalten angeordnet sind, wie dies in ähnlicher Form auch bei Pipettiereinheiten für Mehrfach-Pipettiervorrichtungen der Fall ist. Zur Vereinfachung der Darstellung sind in Figur 2 nur jeweils zwei der Pipettieraufsätze 10 und zwei der Aufnahmeöffnungen 52 mit Bezugszeichen versehen.

Figur 2 ist entnehmen, dass auch die Aufnahmeöffnungen 52 des Sammelbehälters dem Verlauf des Außenumfangs der Pipettieraufsätze 10 in den Anlagebereichen 46 entsprechen und damit ebenfalls eine vierzählige Drehsymmetrie aufweisen. Diese Form sorgt dafür, dass die in den Aufnahmeöffnungen 52 aufgenommenen Pipettieraufsätze 10 sich relativ zu dem Sammelbehälter 50 nicht um ihre Längsachse A verdrehen können und somit durch eine Pipettiereinheit anhand deren Einstellung relativ zu dem Sammelbehälter sicher aufgenommen werden können.

## Patentansprüche

1. Pipettieraufsatz (10), umfassend
einen sich entlang eines Durchgangs, der an gegenüberliegenden Stirnseiten in jeweilige Stirnöffnungen (20, 36a - 36d) mündet, erstreckenden Mantel (34a - 34d, 40, 22),
wobei der Mantel (34a - 34d, 40, 22) an der einen Stirnseite mit einer ersten Koppelanordnung (30) versehen ist, welche mit einer ersten Gegen-Koppelanordnung einer Pipettiereinheit koppelbar ist, und
wobei der Mantel (34a - 34d, 40, 22) an der anderen Stirnseite eine Öffnung (20) zum Durchtritt eines zu pipettierenden Mediums aufweist, **dadurch gekennzeichnet, dass** die erste Koppelanordnung (30) eine Mehrzahl von jeweils eine Stirnöffnung (36a - 36d) umgebenden Koppelelementen (32a - 32d) aufweist, wobei ein jedes der Koppelelemente (32a - 32d) mit einem jeweils zugeordneten aus einer Gruppe von mehreren an der Pipettiereinheit ausgebildeten Gegen-Koppelelementen, von denen ein jedes einem Pipettierkanal der Pipettiereinheit zugeordnet ist, koppelbar ist, oder/und der Mantel (34a - 34d, 40, 22) an der anderen Stirnseite eine Mehrzahl von Öffnungen (20) zum Durchtritt des zu pipettierenden Mediums aufweist.

2. Pipettieraufsatz (10) nach Anspruch 1,
wobei der Mantel (34a - 34d, 40, 22) einen die erste Koppelanordnung (30) aufweisenden oberen Mantelabschnitt (34a - 34d) aufweist und einen an den oberen Abschnitt (34a - 34d) anschließenden unteren Mantelabschnitt (40, 22) aufweist.

3. Pipettieraufsatz (10) nach Anspruch 2,
wobei der obere (34a - 34d) und der untere (40) Mantelabschnitt integral ausgebildet sind.

4. Pipettieraufsatz (10) nach Anspruch 2,
wobei der obere (34a - 34d, 40) und der untere (22) Mantelabschnitt separat ausgebildet sind und der eine Mantelabschnitt (34a - 34d, 40; 22) mit seiner Stirnseite an einer zugeordneten Stirnseite des anderen Mantelabschnitts (22; 34a - 34d, 40) befestigt ist.

5. Pipettieraufsatz (10) nach Anspruch 4,
wobei die einander zugeordneten Stirnabschnitte (40, 22a) des oberen (34a - 34d, 40) und des unteren (22) Mantelabschnitts je eine zueinander komplementäre Befestigungs-Rastanordnung (16, 18) aufweisen.

6. Pipettieraufsatz (10) nach Anspruch 5,
wobei die einander zugeordneten Stirnabschnitte (40, 22a) zusätzlich je eine zueinander komplementäre Dichtungsanordnung (44, 26) aufweisen.

7. Pipettieraufsatz (10) nach einem der Ansprüche 1 bis 6,
wobei Pipettieraufsatz (10) an seiner anderen Stirnseite als Pipettenspitze ausgebildet ist.

8. Pipettieraufsatz (10) nach einem der Ansprüche 1 bis 6,
wobei der Mantel (34a - 34d, 40) an seiner anderen Stirnseite ein weiteres Gegen-Koppelelement (18) aufweist, das mit einem Koppelelement (16) an einer Stirnseite eines weiteren Mantels (22) koppelbar ist.

9. Pipettieraufsatz (10) nach einem der Ansprüche 1 bis 8,
wobei die Koppelanordnung (30) an der einen Stirnseite des Mantels (34a - 34d) vier Koppelelemente (32a - 32d) aufweist.

10. Pipettieraufsatz (10) nach einem der Ansprüche 1 bis 9,
wobei die Koppelelemente (32a - 32d) in einer nicht drehsymmetrischen Anordnung oder in einer Anordnung mit in vorbestimmten Winkeln zueinander liegenden Drehsymmetrieachsen angeordnet sind und wobei der Pipettieraufsatz (10) einen nicht drehsymmetrischen Anlagebereich (46) zur Anlage an einer Aufnahmeöffnung (52) eines Sammelbehälters (50) aufweist.

11. Pipettieraufsatz (10) nach einem der Ansprüche 1 bis 10,
wobei der Pipettieraufsatz (10) im Spritzgussverfahren, ggf. in einem Mehrkomponentenspritzgussverfahren hergestellt ist.
